(19) Europäisches Patentamt
European Patent Office
Office européen des brevets

(11) EP 0 685 539 B1

# (12) EUROPÄISCHE PATENTSCHRIFT

(45) Veröffentlichungstag und Bekanntmachung des Hinweises auf die Patenterteilung:
**29.08.2001 Patentblatt 2001/35**

(51) Int Cl.[7]: **C09D 17/00**, C01B 33/44, D21H 19/40

(21) Anmeldenummer: **95107683.5**

(22) Anmeldetag: **19.05.1995**

(54) **Verfahren zur Herstellung einer wässrigen Feindispersion eines organophilen Schichtsilikates**

Process for preparing a fine aqueous dispersion of an organophilic layered silicate

Procédé de préparation d'une dispersion aqueuse fine d'un silicate à couches organophile

(84) Benannte Vertragsstaaten:
**AT DE FR NL SE**

(30) Priorität: **01.06.1994 DE 4419201**

(43) Veröffentlichungstag der Anmeldung:
**06.12.1995 Patentblatt 1995/49**

(73) Patentinhaber: **Clariant GmbH**
**65929 Frankfurt am Main (DE)**

(72) Erfinder:
- **Horn, Ute**
  **D-65599 Dornburg (DE)**
- **Dessauer, Guido, Prof. Dr.**
  **D-82327 Tutzing (DE)**

(56) Entgegenhaltungen:

| | |
|---|---|
| **EP-A- 0 192 252** | **EP-A- 0 279 313** |
| **EP-A- 0 542 215** | **EP-A- 0 632 161** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 685 539 B1

Printed by Jouve, 75001 PARIS (FR)

## Beschreibung

In EP-A-0 542 215 wird ein Verfahren zur Herstellung einer Feindispersion eines organophilen Schichtsilikates in wäßrigem Medium beschrieben, bei dem man ein organophiles Schichtsilikat, das durch Umsetzung von einem kationenaustauschfähigen Schichtsilikat mit einem quartären organischen Oniumsalz erhalten wird, in eine klare wäßrige Lösung eines Polyvinylalkohols bei einer Temperatur von mindestens 50°C einrührt oder das wasserhaltige organophile Schichtsilikat und den Polyvinylalkohol gleichzeitig in das wäßrige Medium bei einer Temperatur von 50°C einrührt.

In der deutschen Patentanmeldung DE A 43 21 376 wird ein Verfahren zur Herstellung einer Feindispersion eines organophilen Schichtsilikates in einem wäßrigen Medium beschrieben, bei dem man das abgepresste Umsetzungsprodukt (Präzipitat) aus einem kationenaustauschfähigen Schichtsilikat und einem quartären organischen Oniumsalz in eine wäßrige Lösung eines wasserlöslichen, natürlichen Polymeren und/oder dessen Derivat einrührt oder dieses Umsetzungsprodukt aus Schichtsilikat und Oniumsalz und das wasserlösliche Polymer und/oder dessen Derivat gleichzeitig in das wäßrige Medium eingerührt und dispergiert werden.

Gegenstand der Erfindung ist ein Verfahren zur Herstellung einer wäßrigen Feindispersion eines organophilen Schichtsilikates durch Umsetzung von einem kationenaustauschfähigen Schichtsilikat mit einem quartären organischen Oniumsalz in einem wäßrigen Medium, dadurch gekennzeichnet, daß man das kationenaustauschfähige Schichtsilikat in Gegenwart eines wasserlöslichen Hydrogels mit dem quartären organischen Oniumsalz umsetzt.

Als kationenaustauschfähige Schichtsilikate kommen alle synthetischen oder natürlichen Schichtsilikate in Frage. Auch solche, die bis zu 12 bis 20 Gew.-% an Verunreinigungen in Form anderer Mineralien, wie Feldspat, enthalten. Derartige Schichtsilikate sind beispielsweise Montmorillonit, Hectorit, Saporit, Sauconit, Beidellit, Nontronit und bevorzugt Bentonit.

Die wasserlöslichen Hydrogele lassen sich unterteilen in

- synthetische Hydrogele und
- natürliche Hydrogele.

Zu den synthetischen Hydrogelen zählen insbesondere wasserlösliche Polyvinylalkohole und wasserlösliche Polyethylenglykole.
Zu den natürlichen Hydrogele zählen insbesondere wasserlösliche natürliche Polymere und Derivate dieser natürlichen Polymeren.

Es können auch Mischungen aus den vorgenannten synthetischen und natürlichen Hydrogelen eingesetzt werden.

Die verwendeten Polyvinylalkohole besitzen vorteilhafterweise ein mittleres Molekulargewicht ($\overline{M}_w$) zwischen 40 000 und 250 000. Besonders geeignet sind handelsübliche Produkte, wie ®Mowiol 10/98, ®Mowiol 4/88, ®Mowiol 28/99 und ®Mowiol 56/98 (Hoechst AG). Es werden sowohl vollverseifte als auch teilverseifte Polyvinylalkohole verwendet.

Die verwendeten Polyethylenglykole besitzen vorteilhafterweise ein mittleres Molekulargewicht ($\overline{M}_w$) zwischen 5 000 und 500 000, bevorzugt 10 000 und 50 000. Besonders geeignet sind handelsübliche Produkte, wie Polyethylenglykol 10000, Polyethylenglykol 20000 und Polyethylenglykol 35000 der Hoechst AG.

Als natürliche Polymere und deren Derivate kommen bevorzugt in Frage:

1. Wasserlösliche Celluloseether:

Die Viskositätsgrenzen dieser Celluloseether liegen üblicherweise bei 10 bis 500 000, insbesondere 20 bis 150 000 mPa·s (gemessen als 2 %ige wäßrige Lösung mit Höppler-Kugelfall-Viskosimeter bei 20°C in destilliertem Wasser). Das mittlere Molekulargewicht liegt üblicherweise zwischen 5 000 und 500 000.
Beispielhaft seien genannt: Methylcellulose, Methylhydroxyethylcellulose, Methylhydroxypropylcellulose, Hydroxyethylcellulose, Hydroxyethylhydroxypropylcellulose, Carboxymethylcellulose oder Carboxymethylhydroxycellulose. Bevorzugt werden Hydroxyethylcellulose, Methylhydroxyethylcellulose und Natriumcarboxymethylcellulose.
Die in der Praxis wichtigsten Celluloseether werden in Tabelle I mit ihren Veretherungsdaten aufgeführt. Der durchschnittliche Substitutionsgrad (DS) gibt die durchschnittliche Anzahl der Alkylgruppen (hier: Methyl, Ethyl und Propyl) pro Anhydroglucoseeinheit an. Der molare Substitutionsgrad (MS) gibt die durchschnittliche Anzahl an Hydroxyalkylengruppen (hier: Ethyl und Propyl) pro Anhydroglucoseeinheit an.

Bei der in Tabelle I aufgeführten Alkoxy-hydroxypropylhydroxyethylcellulose besteht die Alkoxygruppe aus 2 bis 8 C-Atomen, die geradkettig oder verzweigt miteinander verknüpft sein können und 0,05 bis 50 Gew.-%, bezogen auf das Gewicht des substituierten Celluloseethers, ausmachen.

Tabelle I

| Wasserlösliche Celluloseether | | |
|---|---|---|
| | DS | MS |
| Methylcellulose<br>Methylhydroxyethylcellulose<br>Methylhydroxypropylcellulose | 1,4 - 2,2<br>0,5 - 0,7<br>0,5 - 0,7 | <br>0,05 - 0,5<br>0,1 - 1,0 |
| Hydroxyethylcellulose<br>Hydroxyethylhydroxypropylcellulose<br><br>Hydroxypropylcellulose<br>Ethylhydroxyethylcellulose | -<br><br><br>-<br>0,7 - 1,2 | 0,5 - 0,7<br>MS HE: 0,9 - 1,2<br>MS HP: 0,6 - 0,9<br>2,0 - 3,5<br>0,8 - 2,7 |
| Carboxymethylcellulose-Na<br>Carboxymethylhydroxyethylcellulose | 0,5 - 1,5<br>0,3 - 0,6 | -<br>0,3 - 2,3 |
| Alkoxy-hydroxypropyl-hydroxyethylcellulose | - | 1,5 - 3,5 |
| | DS $OCH_3$ | MS |
| Carboxymethylierte Methylhydroxyethyl- oder<br>Methylhydroxypropylcellulose | 1,3 - 2,0<br>1,3 - 2,2 | 0,5 - 0,5<br>0,1 - 1,0 |

2. Stärkeether

Die Kenndaten von bevorzugt verwendeten Stärkeether sind in Tabelle II aufgeführt.

Tabelle II

| Stärkeether | MS | DS | Viskosität* gem. als 2 %ige wässr. Lösung |
|---|---|---|---|
| Hydroxypropylstärke | 0,1 - 0,8 | - | 5 - 100 |
| Carboxymethylstärke | - | 0,1 - 0,8 | 5 - 100 |
| Hydroxypropylcarboxymethylstärke | 0,1 - 0,8 | 0,1 - 0,5 | 5 - 500 |

* Messung mit Höppler-Kugelfallviskosimeter bei 20°C in dest. Wasser (gemäß DIN 53015)

3. Guar Gum Derivate

In der nachfolgenden Tabelle III sind die bevorzugten Guar Gum Derivate aufgeführt.

Tabelle III

| | |
|---|---|
| Guar Endospermmehl (natürliches Galaktomannan)<br>Viskosität (1 % in Wasser): (gem. mit Brookfield RVT, 25°C, 20 UpM) | 100 - 20 000 mPa•s |
| Carboxymethylguar<br>Viskosität (3 % in Wasser): | 100 - 20 000 mPa•s |
| Hydroxypropylguar<br>Viskosität (1 % in Wasser): | 100 - 10 000 mPa·s |
| Carboxymethylhydroxypropylguar<br>Viskosität (1 % in Wasser): | 100 - 20 000 mPa•s |
| Kationisierter Guar<br>(quarternäre Substitution DS ca. 0,13) Viskosität (1 % in Wasser): | 100 - 20 000 mPa·s |

4. Xanthan Gum Derivate

Bei diesen Verbindungen handelt es sich um anionische Polysaccharide, die durch Fermentation und Extraktion aus Xanthimonas campestris hergestellt werden. Die Viskosität beträgt 100 - 10 000 mPa.s (gemessen mit Brookfield RVT, 25°C, 20 UpM, 1 %ige wäßrige Lösung).

5. Alginate

Bezeichnung für die Salze und Ester der Alginsäure. Vorzugsweise werden niedrigviskose Ammonium- oder Natriumsalze der Alginsäure verwendet. Üblicherweise werden die Alginate zusammen mit Celluloseethern und/oder Stärkeestern eingesetzt.

Als quartäre organische Oniumsalze kommen insbesondere in Frage Verbindungen der Formel

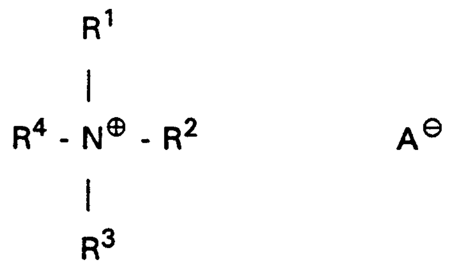

wobei

| | |
|---|---|
| $R^1$ und $R^2$ | unabhängig voneinander $C_8$-$C_{22}$-Alkyl, $C_8$-$C_{22}$-Alkenyl oder Benzyl bedeuten, |
| $R^3$ und $R^4$ | $C_1$-$C_4$-Alkyl darstellt und |
| $A^{\ominus}$ | ein Anion, bevorzugt Chlorid ist. |

Besonders bevorzugt sind die Verbindungen Dimethyldistearylammoniumchlorid und Benzyldimethylstearylammoniumchlorid.

Zur Herstellung der wäßrigen Feindispersionen werden neben den kationenaustauschfähigen Schichtsilikaten und den quartären organischen Oniumsalzen wasserlösliche Hydrogele eingesetzt.

Es hat sich gezeigt, daß durch den Einsatz eines Gemisches aus kationenaustauschfähigem Schichtsilikat und wasserlöslichem Hydrogel der Feststoffgehalt an kationenaustauschfähigem Schichtsilikat wesentlich erhöht werden kann und demzufolge auch der Feststoffgehalt an organophilem Schichtsilikat gegenüber bisher bekannten Feindispersionen wesentlich erhöht werden kann. Als Folge davon läßt sich auch der Gesamtfeststoffgehalt der erfindungsgemäß hergestellten Feindispersionen wesentlich erhöhen.

Bei dem erfindungsgemäßen Verfahren wird ein Gemisch aus einem kationenaustauschfähigen Schichtsilikat und einem wasserlöslichen Hydrogel mit einem quartären organischen Oniumsalz in einem wäßrigen Medium umgesetzt.

Das wäßrige Medium besteht bevorzugt aus Wasser und enthält gegebenenfalls wassermischbare Flüssigkeiten, z.B. Entschäumer, Alkohole wie Isopropanol oder Butanol, und/oder Tenside.

Bei der Herstellung der wäßrigen Feindispersion wird im allgemeinen das wäßrige Medium vorgelegt und nachfolgend die vorstehend genannten drei Bestandteile nacheinander oder als Mischung aus zwei Bestandteilen in ein gegebenenfalls erwärmtes wäßriges Medium, mit einer Temperatur von 60°C bis unterhalb des Siedepunktes des wäßrigen Mediums, bevorzugt 60 bis 90°C, besonders bevorzugt 75 bis 85°C gegeben.

In einer bevorzugten Ausführungsform wird ein Gemisch aus kationenaustauschfähigem Schichtsilikat und wasserlöslichem Hydrogel in dem wäßrigen Medium vorgelegt und anschließend das quartäre organische Oniumsalz zugegeben.

Hierzu werden üblicherweise das kationenaustauschfähige Schichtsilikat und das wasserlösliche Hydrogel abwechselnd nacheinander oder im Gemisch in das bevorzugt kalte wäßrige Medium mit einer Temperatur von 20°C eingebracht. Ebenfalls möglich ist die Zugabe von Schichtsilikat und Hydrogel zu dem bereits erwärmten wäßrigen Medium. Während des Einbringens oder danach wird das wäßrige Medium gerührt, bevorzugt Rühren unter hohen Scherkräften, bis eine weitestgehend klare Lösung vorliegt. Diese Lösung wird dann auf eine Temperatur zwischen 60°C und unterhalb des Siedepunktes der Lösung, bevorzugt 60 bis 90°C, besonders bevorzugt 75 bis 85°C, erhitzt. Bei dieser Temperatur wird das quartäre organische Oniumsalz, bevorzugt als 6 bis 20 gew.-%ige wäßrige Lösung, besonders bevorzugt als erwärmte 6 bis 20 gew.-%ige wäßrige Lösung, zugegeben. Die Zugabe erfolgt unter Rühren, bevorzugt unter Rühren mit hohen Scherkräften. Hierbei empfiehlt sich eine kontinuierliche und langsame Zugabe des Oniumsalzes.

In einer weiteren bevorzugten Ausführungsform wird das quartäre organische Oniumsalz, gegebenenfalls in

dem wäßrigen Medium, vorgelegt und nachfolgend das Gemisch aus kationenaustauschfähigem Schichtsilikat und wasserlöslichem Hydrogel zugegeben.
Hierzu wird im allgemeinen das quartäre organische Oniumsalz, bevorzugt als 6 bis 20 gew.-%ige wäßrige Lösung, in das bevorzugt kalte wässrige Medium mit einer Temperatur von 20°C eingebracht und anschließend die erhaltene Lösung auf eine Temperatur zwischen 60°C und unterhalb des Siedepunktes der Lösung, bevorzugt 60 bis 90°C, besonders bevorzugt 75 bis 85°C erhitzt. Ebenfalls möglich ist die Zugabe des quartären organischen Oniumsalzes zu dem bereits erwärmten wäßrigen Medium. Anschließend wird das Gemisch aus kationenaustauschfähigem Schichtsilikat und wasserlöslichem Hydrogel in das erwärmte wässrige Medium, enthaltend das quartäre organische Oniumsalz, gegegeben. Die Zugabe erfolgt unter Rühren, bevorzugt unter Rühren mit hohen Scherkräften, kontinuierlich und langsam.

Die Vorlage eines wäßrigen Mediums, bevorzugt Wasser, ist nicht unbedingt erforderlich. In den Fällen, in denen das quartäre organische Oniumsalz, als wässrige Lösung eingesetzt wird, dient diese Lösung als wäßriges Medium.

Es hat sich gezeigt, daß bei den vorstehend beschriebenen Vorgehensweisen sehr feinteilige Dispersionen hergestellt werden können.

Die Feindispersion aus kationenaustauschfähigem Schichtsilikat, quartärem organischem Oniumsalz und wasserlöslichem Hydrogel besitzt bevorzugt folgende Zusammensetzung:

65-95, bevorzugt 70-85 Gewichtsteile Schichtsilikat, bezogen auf handelsübliches Schichtsilikat,
5-35, bevorzugt 15-30 Gewichtsteile Oniumsalz und
3-30 Gew.-% Hydrogel, bezogen auf das wasserfreie organophile Schichtsilikat, das durch Umsetzung von kationenaustauschfähigem Schichtsilikat mit quartärem organischem Oniumsalz erhalten wird.

Die nach dem erfindungsgemäßen Verfahren hergestellten Feindispersionen besitzen in der Regel einen Gehalt an organophilem Schichtsilikat im Bereich von 3 bis 24 Gew.-%, bevorzugt von 15 bis 21 Gew.-%, bezogen auf das Gesamtgewicht der Feindispersion. Der Gehalt an wasserlöslichem Hydrogel liegt zwischen 3 bis 30 Gew.-%, bevorzugt zwischen 12 bis 17 Gew.-%, bezogen auf das wasserfreie organophile Schichtsilikat. Der Gesamtfeststoffgehalt der wäßrigen Feindispersion liegt üblicherweise bei 12 bis 26 Gew.-%, bezogen auf das Gesamtgewicht der wäßrigen Feindispersion.

Die erfindungsgemäß hergestellten Feindispersionen können in den Fällen, in denen das Hydrogel filmbildende Eigenschaften besitzt, direkt zum Beschichten von Papier und Karton eingesetzt werden. Zu derartigen Hydrogelen zählen insbesondere die wasserlöslichen Polyvinylalkohole, die Celluloseether, wie Tylosen oder Carboxymethylcellulose, und die Stärkeether.

In den Fällen, in denen das wasserlösliche Hydrogel keine filmbildenden Eigenschaften besitzt, z.B bei den Polyethylenglykolen, kann der Feindispersion ein Bindemittel herkömmlicher Art zugesetzt werden.
Vor Einsatz der Feindispersionen zum Beschichten von Papier und Karton ist es empfehlenswert die hergestellten Feindispersionen durch bekannte Maßnahmen zu konservieren. Die Konservierung kann durch Zugabe geeigneter Desinfektionsmittel, wie Wasserstoffperoxid, Isothiazolinderivate oder quartären Ammoniumsalzen mit bakteriziden Eigenschaften erfolgen.
Den erfindungsgemäß hergestellten Feindispersionen können vor dem Beschichten dem Fachmann bekannte optische Aufheller, bevorzugt kationische oder wenig ionogene optische Aufheller, zugesetzt werden, um den in wäßrigen Strichen auftretenden Gelbstich zu unterdrücken. Diese optischen Aufheller können auch bereits in dem Gemisch aus Schichtsilikat und Hydrogel enthalten sein.

Die erfindungsgemäß hergestellten Feindispersionen besitzen auch eine hohe Stabilität und Lagerfähigkeit und sind auch zur Herstellung von Streichmassen für Papier und Karton, insbesondere pigmenthaltigen Streichmassen, bevorzugt kationischen Pigment-Streichmassen, die dann ebenfalls eine gute Stabilität und Lagerfähigkeit besitzen, geeignet.

Die erfindungsgemäß hergestellten Feindispersionen eignen sich sowohl zum einseitigen als auch zum beidseitigen Beschichten von Papier und Karton. Sie eignen sich zum Beschichten aller Arten von Papieren, wie sie beim Tiefdruck, Rollenoffsetdruck, Bogenoffsetdruck und Hochdruck benötigt werden. Besonders geeignet sind sie zum Beschichten von Papier mit geringer flächenbezogener Masse, wie LWC- oder LLWC-Papieren. Das Beschichten erfolgt mit Hilfe geeigneter Vorrichtungen, wie Luftbürsten-Streichmaschinen, "Gravur-Coater", "Blade Coater", Leimpressen oder Filmpressen, wobei nach bekannten Verfahren gearbeitet wird. Darüber hinaus kann die Beschichtung auch auf gegebenenfalls vorhandene Pigmentstriche aufgetragen werden.

Aus wirtschaftlichen Gründen ist man bestrebt, bei Druckerzeugnissen mit hoher Auflage, beispielsweise bei Zeitschriften oder Versandkatalogen, Dünndruckpapiere zu verwenden. Hierbei ergeben sich aber Probleme hinsichtlich der Opazität, d.h. es kommt beim Drucken zu einem störenden Durchscheinen des Druckes auf die andere Seite des Papiers. Zur Verhinderung dieses Effektes werden die nach dem erfindungsgemäßen Verfahren hergestellten

wäßrigen Feindispersionen auf das Papier aufgetragen. Je nach Wahl des Auftragsystems und der gewählten Papiersorte wird die wäßrige Feindispersion zu geringeren Feststoffgehalten verdünnt. So hat es sich gezeigt, daß es von Vorteil ist, bei der Verwendung von Leimpressen, die Feindispersion auf einen Gesamtfeststoffgehalt im Bereich zwischen 7 und 9 Gew.-%, bezogen auf die wasserfreie Feindispersion einzustellen. Bei Verwendung von Filmpressen, z.B. "Speed-Sizer" (System Voith Heidenheim) oder "Metering Size Press"-System, ist es von Vorteil, die Feindispersion auf einen Gesamtfeststoffgehalt im Bereich zwischen 17 und 23 Gew.-%, bezogen auf die wasserfreie Feindispersion einzustellen.

Es hat sich gezeigt, daß die Feindispersionen auch als Zusatz für kationische Pigmentstreichmassen konventioneller Art in einer Größenordnung von 0,3 - 15, bevorzugt 1 - 5, insbesondere bevorzugt 1- 2,5 Gew.-%, bezogen auf den Gesamttrockengehalt der Streichmasse, verwendet werden können, wobei sie auch im Austausch für das als Gleitmittel verwendete Calciumstearat eingesetzt werden.

Neben dem Verdünnen der Feindispersionen besteht auch die Möglichkeit, die Feindispersionen durch geeignete Maßnahmen, wie Vakuumdestillation aufzukonzentrieren und in dieser konzentrierten Form zum Beschichten von Papier und Karton zu verwenden. Die durch Aufkonzentrierung hergestellten erfindungsgemäßen Feindispersionen besitzen vorzugsweise einen Gesamtfeststoffgehalt von 10 bis 40, vorzugsweise 18 bis 30 Gew.-%, bezogen auf die wasserfreie Feindispersion. Es hat sich gezeigt, daß diese aufkonzentrierten Feindispersionen auch als Zusatz für kationische Pigmentstreichmassen konventioneller Art in einer Größenordnung von 0,3 bis 15, bevorzugt 1 bis 5, besonders bevorzugt 1 bis 2,5 Gew.-%, bezogen auf den Gesamttrockengehalt verwendet werden können, wobei sie auch im Austausch für das als Gleitmittel verwendete Calciumstearat eingesetzt werden.

Die mit den erfindungsgemäß hergestellten Feindispersionen bestrichenen Papiere und Kartons werden in einem anschließenden Arbeitsgang satiniert, wobei die Satinage gegebenenfalls mit gekühlten Walzen erfolgt.

Die Vorteile der erfindungsgemäß hergestellten wäßrigen Feindisperion bestehen darin, daß zur Herstellung der wäßrigen Feindispersionen auf die bisher übliche Verwendung von Präzipitaten verzichtet werden kann. Bei den erfindungsgemäß hergestellten Feindispersionen liegt die Strichauftragsmenge vorzugsweise in einem Bereich von 1,0 bis 2,5 $g/m^2$ auf jeder Seite. Die Vorteile, die mit den erfindungsgemäß hergestellten Feindispersionen auf Druckgegenstände erzielt werden, lassen sich wie folgt darstellen: volle Toluoldichte, Reduzierung des Durchschlagens und Durchscheinens der Druckfarbe, Erhöhung des Farbstandes und der Farbtiefe, Verbesserung der Farbannahme, Anstieg des Druckglanzes und Reduzierung der "missing-dots". Beim Karton, der oftmals nach dem Bedrucken überlakkiert wird, verringert sich durch die Beschichtung mit dem erfindungsgemäß hergestellten Mittel der Lackverbrauch.
Sehr vorteilhaft ist es auch, die erfindungsgemäß hergestellten Feindispersionen als dünnen Deckstrich auf einen einfach oder doppelt aufgetragenen Grundierstrich aufzubringen.
Aufgrund ihrer oleophilen Oberflächeneigenschaften lassen sich die erfindungsgemäß hergestellten Feindispersionen bevorzugt beim Tiefdruck und Rollenoffset-Druck einsetzen. Darüber hinaus wird bei Verwendung der erfindungsgemäß hergestellten Feindispersionen das wiederablösen ("Deinking") der Druckfarbe erleichtert, da die Toluoldichte das eindringen der Druckfarbe bis auf die Faser verhindert wodurch weniger Farbe aufgetragen werden wird um die gleiche Farbtiefe zu erreichen.

Ein weiterer Vorteil der erfindungsgemäß hergestellten wäßrigen Feindisperion besteht darin, daß die Restfeuchte in einem Strich mit 2 bis 10, vorzugsweise 2 bis 8, insbesondere bevorzugt 3 bis 7 Gew.-%, deutlich oberhalb der bisher üblichen Restfeuchten von handelsüblichen Strichen, welche in der Regel ca. 1 Gew.-% Restfeuchte im Strich enthalten, liegt.
Hieraus ergibt sich eine bessere Verarbeitbarkeit der damit betrichenen Papiere, weil bei Falzung des beschichteten Papieres der aufgetragene Strich im Falz nicht bricht bzw. abplatzt, insbesondere nicht nach einer Hochtemperatur-Trocknung wie sie im Rollenoffset-Druck üblich ist.

Beispiel

Allgemeine Vorschrift zur Herstellung der wäßrigen Feindispersion

Das kationenaustauschfähige Schichtsilkat und das wasserlösliche Hydrogel werden abwechselnd in kaltes Wasser (20°C) unter intensivem Rühren eingestreut. Anschließend wird die Suspension unter Rühren auf eine Temperatur von 75-85°C aufgeheizt und bei dieser Temperatur das quartäre organische Oniumsalz, mit einem Feststoffgehalt von 17 Gew.-%, in der gleichen Menge 80°C heißem Wasser gelöst und unter intensivem Rühren langsam hinzugefügt. Es wird noch ca. 30 Minuten weitergerührt und danach die hergestellte Feindispersion abgekühlt. Während des Abkühlens wird bei einer Temperatur von ca. 50°C ein optischer Aufheller zugefügt.

Tabelle IV:

| (Angaben in Gew.-%, feststoffbezogen) | | | | |
|---|---|---|---|---|
| Beispiel | 1 | 2 | 3 | 4 |
| Schichtsilikat[1)] | 7,1 | 8,25 | 7,1 | 10,6 |
| Hydrogel[2)] | | | | 2,7 |
| Hydrogel[3)] | 1,8 | | 1,2 | |
| Hydrogel[4)] | | 2,25 | | |
| Hydrogel[5)] | | | 0,6 | |
| Oniumsalz[6)] | 3,1 | 4,5 | 3,1 | 4,7 |
| Konservierungsmittel[7)] | 0,1 | 0,1 | 0,1 | 0,1 |
| Optischer Aufheller[8)] | 0,2 | 0,2 | 0,2 | 0,2 |
| Wasser | ad 100 | ad 100 | ad 100 | ad 100 |

[1)] Na/Mg-Bentonit, handelsüblich

[2)] Hydroxyethylcelluloseether, Granulat, normal verethert (MS = 0,5-0,7), Viskosität: 20 mPa·s (gemessen mit Höppler-Viskosimeter, 2 %ige wäßrige Lösung, 20°C)

[3)] Methylhydroxyethylcelluloseether, Granulat, normal verethert (DS=0,5-0,7), Viskosität: 300 mPa·s (gemessen mit Höppler-Viskosimeter, 2 %ige wäßrige Lösung, 20°C)

[4)] Carboxymethylcelluloseether, Granulat, normal verethert (DS=0,5-0,7), Viskosität: 300 mPa·s (gemessen mit Höppler-Viskosimeter, 2 %ige wäßrige Lösung, 20°C)

[5)] hier: ®Solvitose H4

[6)] Distearyldimethylammoniumchlorid (16 gew.-%ige wäßrige Lösung)

[7)] hier: ®Mergal K9N (Hersteller: Hoechst AG)

[8)] hier: ®Blancophor flüssig (Hersteller: Bayer AG)

Beschichtung, Satinage und papiertechnische Auswertung:

Mit den Feindispersionen des Beispiels 4 werden holzhaltige LLWC-Rohpapiere mit 32 bis 35 g/m$^2$ Flächengewicht beschichtet. Das Beschichten erfolgt mittels Filmpresse (Speedsizer, 800 mm Breite). Die Trägerpapiere werden beidseitig beschichtet (Auftragsgewicht 1,5-2 g/m$^2$/Seite). An das Auftragswerk schließt sich unmittelbar die Trocknung der beschichteten Papiere an. Die Satinage erfolgt bei 45 und 90°C bei 180 dN/cm$^2$. (Tabelle V).

Tabelle V: Papiertechnische Auswertung:

| Rohpapier: | 32 g/m², holzhaltig | | | | | | 35 g/m², holzhaltig | | | |
|---|---|---|---|---|---|---|---|---|---|---|
| Satinage: | 45°C | | | 90°C | | | 45°C | | 90°C | |
| Strichgewicht (g/m²/beidseitig) | 0 | 3.4 | 4.2 | 0 | 3.4 | 4.2 | 0 | 4.1 | 0 | 4.1 |
| Glätte nach Bekk (s) | 447 | 838 | 621 | 1563 | 1843 | 1991 | 550 | 1111 | 1608 | 1094 |
| Glanz, 75° (%) | 22.0 | 23.4 | 25.0 | 32.2 | 28.9 | 40.1 | 24.4 | 26.0 | 35.2 | 41.6 |
| Luftdurchlässigkeit n. Bendtsen (ml/min) | 51 | 16 | 13 | 22 | <10 | <10 | 93 | 25 | 48 | 12 |

Die Restfeuchte wurde wie folgt ermittelt:

Auf eine getrocknete und entfettete Glasplatte werden einzelne Striche aufgebracht und getrocknet. Nachfolgend wird in einem Klimaraum (23°C, 50% relative Luftfeuchtigkeit, DIN-ISO 187) für 24 Stunden klimatisiert. Anschließend wird der Strich von der Glasplatte abgenommen und im Wiegeschälchen bei 105°C getrocknet. Nach Abkühlen im Exsikkator wird durch Wiegen die Differenz und somit die Restfeuchte bestimmt.
Als Vergleich werden zwei Leykam Deckstriche (Hochglanz/Matt) herangezogen. Wie aus Tabelle VI ersichtlich liegen die Restfeuchten deutlich oberhalb der bisher üblichen Restfeuchten.

Tabelle VI:

| Strich | Restfeuchte in Gew.-% |
|---|---|
| Leykam[1)] Deckstrich (Hochglanz) | 0,95 |
| Leykam[1)] Deckstrich (Matt) | 0,83 |
| Feindispersion (20 gew.-%ig) mit Mowiol 4/88 als Binder | 4,70 |
| Feindispersion mit 20 Gew.-% Tylose H 20 als Binder | 6,20 |

[1)] Zellstoff & Papierfabrik Mürztaler Leykam AG (Gratkorn, Österreich)

## Patentansprüche

1. Verfahren zur Herstellung einer wäßrigen Feindispersion eines organophilen Schichtsilikates durch Umsetzung von einem kationenaustauschfähigen Schichtsilikat mit einem quartären organischen Oniumsalz in einem wäßrigen Medium, **dadurch gekennzeichnet**, daß man das kationenaustauschfähige Schichtsilikat in Gegenwart eines wasserlöslichen Hydrogels mit dem quartären organischen Oniumsalz umsetzt.

2. Verfahren nach Anspruch 1, **dadurch gekennzeichnet**, daß das kationenaustauschfähige Schichtsilikat ein synthetisches oder natürliches Schichtsilikat mit bis zu 12 bis 20 Gew.-% an Verunreinigungen in Form anderer Mineralien ist.

3. Verfahren nach Anspruch 1 oder 2, **dadurch gekennzeichnet**, daß das quartäre organische Oniumsalz aus Verbindungen der Formel $(NR^1R^2R^3R^4)^+ A^-$ besteht, in denen

   $R^1$ und $R^2$ $C_8$-$C_{22}$-Alkyl, $C_8$-$C_{22}$-Alkenyl oder Benzyl,
   $R^3$ und $R^4$ $C_1$-$C_4$-Alkyl oder $C_1$-$C_4$-Hydroxyalkyl und
   $A^-$ ein Anion, bevorzugt Chlorid bedeuten.

4. Verfahren nach einem der Ansprüche 1 bis 3, **dadurch gekennzeichnet**, daß es sich bei dem wasserlöslichen Hydrogel um ein wasserlösliches synthetisches Hydrogel, ein wasserlösliches natürliches Hydrogel oder Mischungen der vorgenannten Hydrogele handelt.

5. Verfahren nach Anspruch 4, dadurch gekenzeichnet, daß das wasserlösliche synthetische Hydrogel für einen Polyvinylalkohol mit einem mittleren Molekulargewicht zwischen 40 000 und 250 000 und/oder ein Polyethylenglykol mit einem mittleren Molekulargewicht zwischen 5000 und 500 000 steht.

6. Verfahren nach Anspruch 4, **dadurch gekennzeichnet**, daß es sich bei dem wasserlöslichen natürlichen Hydrogel um ein wasserlösliches natürliches Polymer und/oder dessen Derivate handelt.

7. Verfahren nach Anspruch 6, **dadurch gekennzeichnet**, daß es sich bei dem wasserlöslichen natürlichen Polymer und/oder dessen Derivate um einen Celluloseether, einen Stärkeether, ein Guar Gum Derivat und/oder Alginat handelt.

8. Verfahren nach Anspruch 7, **dadurch gekennzeichnet**, daß es sich bei dem Celluloseether um einen Hydroxyethylcelluloseether, Methylhydroxyethylcelluloseether und/oder Carboxymethylcelluloseether handelt.

9. Verfahren nach Anspruch 7 oder 8, **dadurch gekennzeichnet**, daß der Celluloseether ein mittleres Molekulargewicht zwischen 5000 und 500 000 und eine Viskosität zwischen 10 und 500 000, insbesondere 20 bis 150 000 mPa·s (gemessen als 2 gew.-%ige wäßrige Lösung mit Höppler-Kugelfall-Viskosimeter bei 20°C in destilliertem Wasser) besitzt.

**10.** Verfahren nach einem der Ansprüche 1 bis 9, **dadurch gekennzeichnet**, daß das wäßrige Medium Wasser ist und gegebenenfalls einen Entschäumer, Alkohol und/oder ein Tensid enthält.

**11.** Verfahren nach einem der Ansprüche 1 bis 10, **dadurch gekennzeichnet**, daß das wäßrige Medium vorgelegt wird und das Schichtsilikat, das Hydrogel und das Oniumsalz nacheinander in das gegebenenfalls erwärmte wäßrige Medium gegeben werden.

**12.** Verfahren nach einem der Ansprüche 1 bis 11, **dadurch gekennzeichnet**, daß das wäßrige Medium eine Temperatur zwischen 60 bis 90°C, bevorzugt 75 bis 85°C besitzt.

**13.** Verfahren nach einem de Ansprüche 1 bis 12, **dadurch gekennzeichnet**, daß man ein Gemisch aus Schichtsilikat und wasserlöslichem Hydrogel in das wäßrige Medium einbringt und anschließend das Oniumsalz zugibt.

**14.** Verfahren nach Anspruch 13, **dadurch gekennzeichnet**, daß man das Schichtsilikat und das Hydrogel nacheinander oder abwechselnd nacheinander in das wäßrige Medium einbringt, während des Einbringens oder danach das wäßrige Medium rührt, bevorzugt Rühren unter hohen Scherkräften, bis eine weitestgehend klare Lösung vorliegt, diese Lösung auf eine Temperatur zwischen 60°C und unterhalb des Siedepunktes der Lösung, bevorzugt 60 bis 90°C, besonders bevorzugt 75 bis 85°C, erhitzt, bei dieser Temperatur unter Rühren, bevorzugt Rühren unter hohen Scherkräften, das Oniumsalz zugibt und gegebenenfalls nach beendeter Zugabe so lange weiterrührt, bis die gewünschte Feindispersität erreicht ist.

**15.** Verfahren nach einem der Ansprüche 1 bis 12, **dadurch gekennzeichnet**, daß das quartäre organische Oniumsalz in dem wäßrigen Medium vorgelegt wird und nachfolgend das Gemisch aus Schichtsilikat und Hydrogel zugegeben wird.

**16.** Verfahren nach Anspruch 15, **dadurch gekennzeichnet**, daß man das quartäre Oniumsalz in das wäßrige Medium einbringt, anschließend diese Lösung auf eine Temperatur zwischen 60°C und unterhalb des Siedepunktes der Lösung, bevorzugt 60 bis 90°C, besonders bevorzugt 75 bis 85°C, erhitzt, bei dieser Temperatur unter Rühren, bevorzugt Rühren unter hohen Scherkräften, das Gemisch aus Schichtsilikat und Hydrogel zugibt und gegebenenfalls nach beendeter Zugabe so lange weiterrührt, bis die gewünschte Feindispersität erreicht ist.

**17.** Verfahren nach einem der Ansprüche 1 bis 16, **dadurch gekennzeichnet**, daß die Feindispersion aus kationenaustauschfähigem Schichtsilikat, quartärem organischem Oniumsalz und wasserlöslichem Hydrogel

65-95, bevorzugt 70-85 Gewichtsteile Schichtsilikat, bezogen auf handelsübliches Schichtsilikat,
5-35, bevorzugt 15-30 Gewichtsteile Oniumsalz und
3-30 Gew.-% Hydrogel, bezogen auf das wasserfreie organophile Schichtsilikat, das durch Umsetzung von kationenaustauschfähigem Schichtsilikat mit quartärem organischem Oniumsalz erhalten wird, enthält.

**18.** Verfahren nach einem der Ansprüche 1 bis 17, **dadurch gekennzeichnet**, daß die wäßrige Feindispersionen durch geeignete Maßnahmen aufkonzentriert wird.

**19.** Verfahren nach Anspruch 18, **dadurch gekennzeichnet**, daß der Gesamtfeststoffgehalt der durch Aufkonzentrierung hergestellten erfindungsgemäßen Feindispersionen 10 bis 40 Gew.-%, bevorzugt 18 bis 30 Gew.-%, bezogen auf die wasserfreie Feindispersion, beträgt.

**Claims**

**1.** A process for the preparation of an aqueous fine dispersion of an organophilic phyllosilicate by reacting a cation-exchangeable phyllosilicate with a quaternary organic onium salt in an aqueous medium, which comprises reacting the cation-exchangeable phyllosilicate with the quaternary organic onium salt in the presence of a water-soluble hydrogel.

**2.** The process as claimed in claim 1, wherein the cation-exchangeable phyllosilicate is a synthetic or natural phyllosilicate having up to 12 to 20% by weight of impurities in the form of other minerals.

**3.** The process as claimed in claim 1 or 2, wherein the quaternary organic onium salt consists of compounds of the

formula $(NR^1R^2R^3R^4)^+ A^-$, in which

$R^1$ and $R^2$ are $C_8$-$C_{22}$-alkyl, $C_8$-$C_{22}$-alkenyl or benzyl,
$R^3$ and $R^4$ are $C_1$-$C_4$-alkyl or $C_1$-$C_4$-hydroxyalkyl and
$A^-$ is an anion, preferably chloride.

**4.** The process as claimed in any of claims 1 to 3, wherein the water-soluble hydrogel is a water-soluble synthetic hydrogel, a water-soluble natural hydrogel or mixtures of the abovementioned hydrogels.

**5.** The process as claimed in claim 4, wherein the water-soluble synthetic hydrogel is a polyvinyl alcohol having an average molecular weight between 40,000 and 250,000 and/or a polyethylene glycol having an average molecular weight between 5000 and 500,000.

**6.** The process as claimed in claim 4, wherein the water-soluble natural hydrogel is a water-soluble natural polymer and/or derivatives thereof.

**7.** The process as claimed in claim 6, wherein the water-soluble natural polymer and/or derivatives thereof are a cellulose ether, a starch ether, a guar gum derivative and/or alginate.

**8.** The process as claimed in claim 7, wherein the cellulose ether is a hydroxyethylcellulose ether, methylhydroxyethylcellulose ether and/or carboxymethylcellulose ether.

**9.** The process as claimed in claim 7 or 8, wherein the cellulose ether has an average molecular weight between 5000 and 500,000 and a viscosity between 10 and 500,000, in particular 20 to 150,000 mPa·s (measured as a 2% by weight aqueous solution using a Höppler falling-ball viscometer at 20°C in distilled water).

**10.** The process as claimed in any of claims 1 to 9, wherein the aqueous medium is water and optionally comprises an antifoam, alcohol and/or a surfactant.

**11.** The process as claimed in any of claims 1 to 10, wherein the aqueous medium is initially introduced, and the phyllosilicate, the hydrogel and the onium salt are added one after the other to the optionally heated aqueous medium.

**12.** The process as claimed in any of claims 1 to 11, wherein the aqueous medium has a temperature between 60 and 90°C, preferably between 75 and 85°C.

**13.** The process as claimed in any of claims 1 to 12, wherein a mixture of phyllosilicate and water-soluble hydrogel is introduced into the aqueous medium and then the onium salt is added.

**14.** The process as claimed in claim 13, wherein the phyllosilicate and the hydrogel are introduced one after the other or alternately one after the other into the aqueous medium, the aqueous medium is stirred during the incorporation or thereafter, preferably under high shear forces, until a largely clear solution forms, this solution is heated to a temperature between 60°C and below the boiling point of the solution, preferably between 60 and 90°C, particularly preferably between 75 and 85°C, the onium salt is added at this temperature with stirring, preferably stirring under high shear forces, and, optionally after the addition is complete, stirring is continued until the desired fine dispersity has been reached.

**15.** The process as claimed in any of claims 1 to 12, wherein the quaternary organic onium salt is initially introduced in the aqueous medium, and subsequently the mixture of phyllosilicate and hydrogel is added.

**16.** The process as claimed in claim 15, wherein the quaternary onium salt is introduced into the aqueous medium, then this solution is heated to a temperature between 60°C and below the boiling point of this solution, preferably between 60 and 90°C, particularly preferably between 75 and 85°C, the mixture of phyllosilicate and hydrogel is added at this temperature with stirring, preferably stirring under high shear forces, and, optionally when the addition is complete, stirring is continued until the desired fine dispersity has been achieved.

**17.** The process as claimed in any of claims 1 to 16, wherein the fine dispersion of cation-exchangeable phyllosilicate, quaternary organic onium salt and water-soluble hydrogel comprises

65-95, preferably 70-85, parts by weight of phyllosilicate, based on commercially available phyllosilicate,
5-35, preferably 15-30, parts by weight of onium salt and
3-30% by weight of hydrogel, based on the anhydrous organophilic phyllosilicate obtained by reacting cation-exchangeable phyllosilicate with quaternary organic onium salt.

**18.** The process as claimed in any of claims 1 to 17, wherein the aqueous fine dispersion is concentrated by suitable measures.

**19.** The process as claimed in claim 18, wherein the total solids content of the fine dispersions according to the invention prepared by concentration is 10 to 40% by weight, preferably 18 to 30% by weight, based on the anhydrous fine dispersion.

**Revendications**

**1.** Procédé de préparation d'une dispersion aqueuse fine d'un silicate lamellaire organophile par réaction d'un silicate lamellaire capable d'échanger des cations avec un sel organique d'onium quaternaire dans un milieu aqueux, **caractérisé en ce qu'**on met à réagir le silicate lamellaire capable d'échanger des cations en présence d'un hydrogel hydrosoluble avec le sel organique d'onium quaternaire.

**2.** Procédé selon la revendication 1, **caractérisé en ce que** le silicate lamellaire capable d'échanger des cations est un silicate lamellaire naturel ou synthétique ayant jusqu'à 12 à 20% en poids d'impuretés sous la forme d'autres minéraux.

**3.** Procédé selon la revendication 1 ou 2, **caractérisé en ce que** le sel organique d'onium quaternaire est constitué de composés de formule $(NR^1R^2R^3R^4)^+ A^-$, dans laquelle

$R^1$ et $R^2$ représentent un groupe alkyle en $C_8$ à $C_{22}$, alcényle en $C_8$ à $C_{22}$ ou benzyle,
$R^3$ et $R^4$ représentent un groupe alkyle en $C_1$ à $C_4$ ou hydroxyalkyle en $C_1$ à $C_4$ et
$A^-$ représente un anion, de préférence le chlorure.

**4.** Procédé selon l'une des revendications 1 à 3, **caractérisé en ce qu'**il s'agit pour l'hydrogel hydrosoluble d'un hydrogel synthétique hydrosoluble, d'un hydrogel naturel hydrosoluble ou de mélanges des hydrogels précités.

**5.** Procédé selon la revendication 4, **caractérisé en ce que**, l'hydrogel synthétique hydrosoluble est un alcool polyvinylique avec une masse moléculaire moyenne comprise entre 40000 et 250000 et/ou un polyéthylèneglycol avec une masse moléculaire moyenne comprise entre 5000 et 500000.

**6.** Procédé selon la revendication 4, **caractérisé en ce qu'**il s'agit pour l'hydrogel naturel hydrosoluble d'un polymère naturel hydrosoluble et/ou des ses dérivés.

**7.** Procédé selon la revendication 6, **caractérisé en ce qu'**il s'agit pour le polymère naturel hydrosoluble et/ou ses dérivés d'un éther de cellulose, d'un éther d'amidon, d'un dérivé de gomme guar et/ou d'alginate.

**8.** Procédé selon la revendication 7, **caractérisé en ce qu'**il s'agit pour l'éther de cellulose d'un éther d'hydroxyéthylcellulose, d'un éther de méthylhydroxyéthylcellulose et/ou d'un éther de carboxyméthylcellulose.

**9.** Procédé selon la revendication 7 ou 8, **caractérisé en ce que** l'éther de cellulose possède une masse moléculaire moyenne comprise entre 5000 et 500000 et une viscosité comprise entre 10 et 500000, en particulier entre 20 et 150000 mPa·s (mesuré dans une solution aqueuse à 2% en poids avec un viscosimètre à chute de bille de Höppler à 20°C dans l'eau distillée).

**10.** Procédé selon l'une des revendications 1 à 9, **caractérisé en ce que** le milieu aqueux est l'eau et contient éventuellement un agent antimoussant, un alcool et/ou un agent tensioactif.

**11.** Procédé selon l'une des revendications 1 à 10, **caractérisé en ce que** le milieu aqueux est placé en premier et qu'on verse le silicate lamellaire, l'hydrogel et le sel d'onium successivement dans le milieu aqueux éventuellement chauffé.

**12.** Procédé selon l'une des revendications 1 à 11, **caractérisé en ce que** le milieu aqueux possède une température comprise entre 60 et 90°C, de préférence entre 75 et 85°C.

**13.** Procédé selon l'une des revendications 1 à 12, **caractérisé en ce qu**'on introduit un mélange de silicate lamellaire et d'hydrogel hydrosoluble dans le milieu aqueux et qu'on ajoute ensuite le sel d'onium.

**14.** Procédé selon la revendication 13, **caractérisé en ce qu**'on introduit le silicate lamellaire et l'hydrogel l'un après l'autre ou inversement dans le milieu aqueux, qu'on met sous agitation le milieu aqueux pendant l'addition ou après, une agitation de préférence sous des forces de cisaillement élevées, jusqu'à obtention d'une solution le plus complètement possible transparente, qu'on chauffe cette solution à une température comprise entre 60°C et en dessous du point d'ébullition de la solution, de préférence entre 60 et 90°C, de manière particulièrement préférée entre 75 et 85°C, qu'on ajoute à cette température sous agitation le sel d'onium, de préférence une agitation sous des forces de cisaillement élevées, et qu'on poursuit éventuellement l'agitation après la fin de l'ajout, jusqu'à l'obtention de la fine dispersivité souhaitée.

**15.** Procédé selon l'une des revendications 1 à 12, **caractérisé en ce que** le sel organique quaternaire d'onium est placé dans le milieu aqueux et qu'on ajoute ensuite le mélange de silicate lamellaire et d'hydrogel.

**16.** Procédé selon la revendication 15, **caractérisé en ce qu**'on introduit le sel d'onium quaternaire dans le milieu aqueux, qu'on chauffe ensuite cette solution à une température comprise entre 60°C et en dessous du point d'ébullition de la solution, de préférence entre 60 et 90°C, de manière particulièrement préférée entre 75 et 85°C, qu'on ajoute à cette température sous agitation, de préférence une agitation sous des forces de cisaillement élevées, le mélange de silicate lamellaire et d'hydrogel et qu'on poursuit éventuellement l'agitation après la fin de l'ajout, jusqu'à l'obtention de la fine dispersivité souhaitée.

**17.** Procédé selon l'une des revendications 1 à 16, **caractérisé en ce que** la fine dispersion de silicate lamellaire capable d'échange de cations, de sel d'onium organique quaternaire et d'hydrogel hydrosoluble contient,

de 65 à 95, de préférence de 70 à 85 parties en poids de silicate lamellaire, par rapport au silicate lamellaire usuel du commerce,
de 5 à 35, de préférence de 15 à 30 parties en poids de sel d'onium et
de 3 à 30% en poids d'hydrogel, par rapport au silicate lamellaire hydrosoluble organophile, qui est obtenu par réaction de silicate lamellaire capable d'échange de cations avec un sel organique d'onium quaternaire.

**18.** Procédé selon l'une des revendications 1 à 17, **caractérisé en ce que** les dispersions aqueuses fines sont concentrées par des mesures appropriées.

**19.** Procédé selon la revendication 18, **caractérisé en ce que** la teneur globale en matières solides des dispersions fines selon l'invention préparées par concentration s'élève à entre 10 et 40% en poids, de préférence entre 18 et 30% en poids, par rapport à la fine dispersion aqueuse.